(19) Europäisches Patentamt

European Patent Office

Office européen des brevets

(11) **EP 4 650 714 A1**

(12) **EUROPEAN PATENT APPLICATION**

(43) Date of publication:
**19.11.2025 Bulletin 2025/47**

(21) Application number: **25174176.5**

(22) Date of filing: **05.05.2025**

(51) International Patent Classification (IPC):
**G01C 21/02** (2006.01)  **G01C 21/16** (2006.01)

(52) Cooperative Patent Classification (CPC):
**G01C 21/025; G01C 21/1656**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.05.2024  US 202418663783**

(71) Applicant: Honeywell International Inc.
**Charlotte, NC 28202 (US)**

(72) Inventors:
• **MERRITT, Ross**
  **Charlotte, 28202 (US)**
• **STEPHENS, Trevor Keith**
  **Charlotte, 28202 (US)**
• **PLOCKER, Steven**
  **Charlotte, 28202 (US)**

(74) Representative: **Haseltine Lake Kempner LLP**
**Cheapside House**
**138 Cheapside**
**London EC2V 6BJ (GB)**

(54) **NAVIGATION INITIALIZATION WITH A CELESTIAL NAVIGATION SYSTEM**

(57)    A navigational initialization system that includes a reference oscillator, altitude reference system, a celestial navigation system (CNS), and a controller is provided. The reference oscillator is used to generate timing signals. The altitude reference system is used to generate altitude information. The CNS includes a star tracker and inertial sensor assembly (ISA). The star tracker is configured to determine orientation of the star tracker with respect to an earth centered inertial frame. The ISA is used to determine at least an attitude with respect to a local vertical frame. The controller is configured to generate an initialization signal using the timing signals generated by the reference oscillator, the altitude information generated from the altitude reference system, and at least one output of the CNS. The initialization signal is configured to initialize a navigation system.

FIG. 1A

**Description**

BACKGROUND

An inertial navigation system (INS) requires an initialization process to initialize a navigation solution which includes initialization of attitude, heading, velocity, and position. Typically, a combination of onboard inertial sensors and additional external sensors provide initialization. Position and velocity are typically known based on a global navigation satellite system (GNSS) such as the global positioning system (GPS). However, if GPS is unavailable, for example because of jamming or spoofing, the initial position will be unknown preventing the navigation system from being initialized.

One method known to deal with the unavailability of GPS at initiation is to use a stored position. This method, however, becomes a problem if the INS moves after the final position is captured at power down. The INS position could also be computed via ranging with other systems via tactical data link or some other non-GPS radio frequency (RF) signal. This solution, however, requires at least three other systems to be within range of the INS (with at least one of them knowing their absolute position) and typically requires line-of-sight to the RF signal.

For the reasons stated above and for other reasons stated below which will become apparent to those skilled in the art upon reading and understanding the present specification, there is a need in the art for an effective and efficient system to initialize an INS when GPS is unavailable.

SUMMARY

The following summary is made by way of example and not by way of limitation. It is merely provided to aid the reader in understanding some of the aspects of the subject matter described. Embodiments provide an inertial navigation system that uses a celestial navigation system to at least establish initialization.

In one embodiment, a navigational initialization system that includes a reference oscillator, altitude reference system, a celestial navigation system (CNS), and a controller is provided. The reference oscillator is used to generate timing signals. The altitude reference system is used to generate altitude information. The CNS includes a star tracker and an inertial sensor assembly (ISA). The star tracker is configured to determine orientation of the star tracker with respect to an earth centered inertial (ECI) frame. The ISA is used to determine at least attitude of the navigation system with respect to a local vertical frame. The controller is configured to generate an initialization signal using the timing signals generated by the reference oscillator, the altitude information generated from the altitude reference system, and at least one output of the CNS. The initialization signal is configured to initialize a navigation system.

In another embodiment, a system that includes a reference oscillator, an altitude reference system, a CNS, a controller, a memory, a navigation system, and a vehicle control system is provided. The reference oscillator is used to generate timing signals. The altitude reference system is used to generate altitude information. The CNS includes a star tracker and an ISA. The star tracker is configured to determine orientation of the star tracker with respect to an ECI frame. an inertial sensor assembly (ISA) used to determine at least an attitude to a local-vertical frame. The controller is configured to generate an initialization signal using the timing signals generated by the reference oscillator, the altitude information generated from the altitude reference system, and at least one output of the CNS. The memory is configured to at least store operating instructions implemented by the controller. The navigation system is in communication with the controller. The generated initialization signal is configured to initialize the navigation system. The vehicle control system is configured to control the operation of an associated vehicle based at least in part on an output of the navigation system.

In still another embodiment a method of initializing a navigation system with a celestial navigation system is provided. The method includes computing a star tracker attitude with a star tracker; computing a platform level using the computed star tracker attitude; computing earth orientation for a world geodetic system (WGS) model using coordinated universal time (UTC) and the computed platform level; computing orientation of an earth frame with respect to a local vertical (LV) using the computed earth orientation of the WGS model; solving latitude and longitude using the computed orientation of the earth frame with respect to the LV; forming a position vector using the solved latitude, the solved longitude, and a reference altitude; and initializing the navigation system based on the formed position vector.

BRIEF DESCRIPTION OF THE DRAWINGS

The present invention can be more easily understood and further advantages and uses thereof will be more readily apparent, when considered in view of the detailed description and the following figures in which:

Figure 1A is a block diagram of a vehicle that includes a navigation initialization system according to an example aspect of the present invention;

Figure 1B is a block diagram of another navigation initialization system according to an example aspect of the present invention;

Figure 2 is an illustration of a reference coordinate frame arrangement showing coordinate frames used according to an example aspect of the present invention;

Figure 3A is a block diagram of a general inertial navigation processing function according to an example aspect of the present invention;

Figure 3B is a block diagram of an inertial navigation processing function illustrating further detail to the general inertial navigation processing function of Figure 3A according to an example aspect of the present invention;

Figure 4 is an illustration of a navigation information gathering flow diagram according to one example aspect of the present invention; and

Figure 5 is an illustration of a propagation and correction flow diagram according to one example aspect of the present invention.

In accordance with common practice, the various described features are not drawn to scale but are drawn to emphasize specific features relevant to the present invention. Reference characters denote like elements throughout Figures and text.

DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a navigation initialization system using a star tracker. The navigation initialization system includes the star tracker, a reference oscillator, and a six degrees of freedom (DOF) (three gyroscopes and three accelerometers) inertial sensor assembly (ISA) in one example. The reference oscillator and six DOF ISA are used to determine the position, velocity, attitude, and true heading of the star tracker. The star tracker and ISA may be collectively referred to as a celestial navigation system (CNS). Given a clear view of the sky, the star tracker uses star observations to determine the orientation of the star tracker with respect to the earth centered inertial (ECI) frame. The ISA accelerometers are used to determine the level plane (tilt angles) of the CNS. This provides the orientation of the star tracker body's vertical plane with respect to the local vertical plane. Assuming current coordinated universal time (UTC) is available via a Host INS or an onboard battery powered clock, the orientation of the Earth Centered Earth Fixed (ECEF) reference frame with respect to the ECI frame can be determined. Combining the orientation information together allows for latitude, longitude, and true heading to be solved. Velocity can be computed by observing position over a time period and then computing the derivative over that time period. An example embodiment propagates a strapdown navigation solution using the gyros and accelerometers and a Kalman filter to estimate navigation errors, inertial sensor errors and star tracker errors. By continuously propagating and correcting for errors in the navigation solution, an inertial navigation function can be run as a reversionary mode, which can be entered after power-up for initialization, or any time during normal operation to re-initialize the navigation solution.

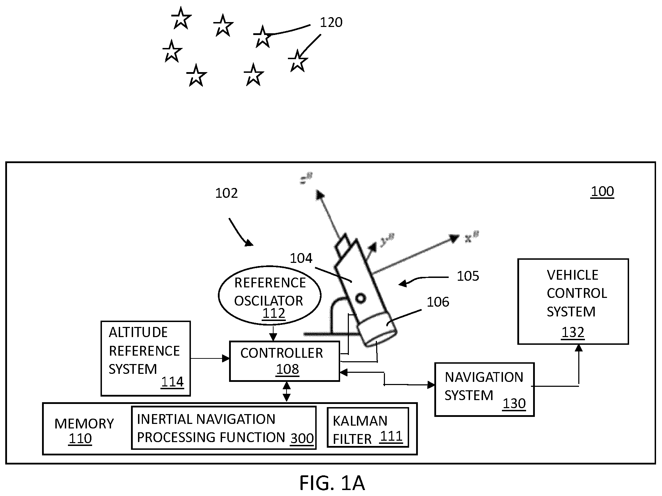

Referring to Figure 1A, a block diagram of vehicle 100 that includes navigation initialization system 102 of an example embodiment is illustrated. Vehicle 100 includes a star tracker 104 that determines location by observing the position of the stars 120. The navigation initialization system 102 also includes an ISA 106 that, as described above, may be collocated with the star tracker 104 in one example. Further the ISA 106 and star tracker may be collectively referred to as CNS 105 whether they are collocated or not. ISA 106 includes three gyroscopes and three accelerometers. In one example, the ISA 106 is an IMU. The navigation initialization system 102 further includes a controller 108 that is in communication with the star tracker 104, the ISA 106, and a memory 110 in this example.

In general, controller 108 may include any one or more of a processor, microprocessor, a digital signal processor (DSP), an application specific integrated circuit (ASIC), a field program gate array (FPGA), or equivalent discrete or integrated logic circuitry. In some example embodiments, controller 108 may include multiple components, such as any combination of one or more microprocessors, one or more controllers, one or more DSPs, one or more ASICs, one or more FPGAs, as well as other discrete or integrated logic circuitry. The functions attributed to controller 108 herein may be embodied as software, firmware, hardware, or any combination thereof. Controller 108 may be part of a system controller or a component controller. For example, the controller 108 may be part of the CNS 105 or part of a navigation system 130 described below. Memory 110 may include computer-readable operating instructions that, when executed by the controller 108 provides functions of the navigation initialization system 102. Such functions may include a lost-on-earth function or inertial navigation processing function 300 used for initializing a navigation system 130 and a Kalman filter 111. The computer readable instructions may be encoded within memory 110. Memory 110 is an appropriate non-transitory storage medium or media including any volatile, nonvolatile, magnetic, optical, or electrical media, such as, but not limited to, a random-access memory (RAM), read-only memory (ROM), non-volatile RAM (NVRAM), electrically-erasable programmable ROM (EEPROM), flash memory, or any other storage medium.

The navigation initialization system 102 may further include a reference oscillator 112 to provide a timing reference for the controller 108 and other components of the navigation initialization system 102. In one example, the reference oscillator 112 is a clock. The navigation initialization system 102 also includes an altitude reference system 114 that provides the controller 108 with a determined altitude.

Controller 108 is further in communication with the navigation system 130. Controller 108 provides an initialization signal to the navigation system 130. The initialization signal may include initialization information such as, but not limited to, a location (latitude and longitude) and a position vector. Further, if there are two samples of location and position vector available, a determined local vertical velocity vector may be determined and included in the initialization signal. An output of the navigation system 130 may be used at least in part to control operations of the vehicle 100 (such as but not limited to control vehicle headings) through a vehicle control system 132.

In one example, a blending filter such as, but not limited to, a Kalman filter 111 is used to estimate navigation errors using signals from the gyroscopes and accelerometers from the ISA 106. By continuously propagating and correcting errors in the navigation solution with use of the Kalman filter 111, the inertial navigation processing function 300 may be run in a reversionary mode, which can be entered after-power up for initialization, or at any time during normal operation to re-initialize a navigation solution from the navigation system. In one example, the Kalman filter 111 is stored in memory 110 and is implemented by controller 108.

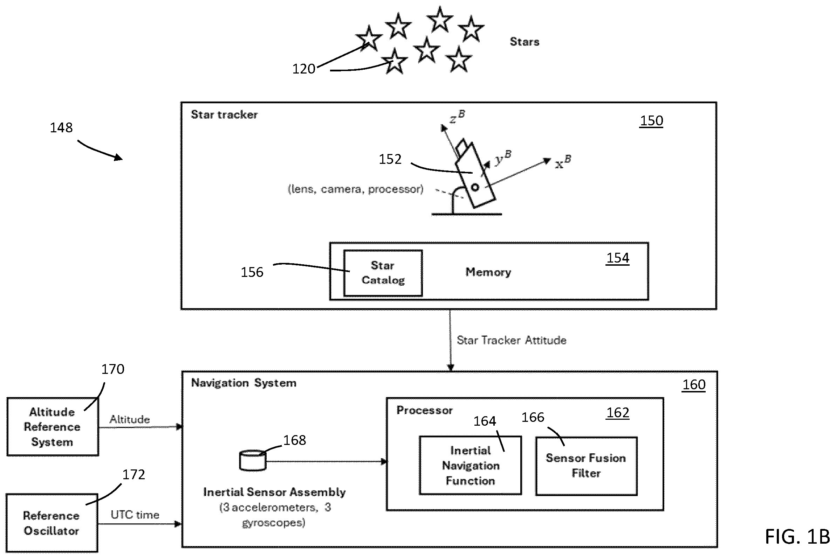

In the example discussed above, ISA 106 is collocated with the start tracker 104. In other examples, the ISA is not collocated with the star tracker. An example where an ISA is not collocated with the star tracker is in the navigation initialization system 148 of Figure 1B. The navigation initialization system 148 example of Figure 1B includes a star tracker system 150 the includes a star tracker 152. The start tracker 152 includes the lens, camera, and a processor. The star tracker system 150 further includes a memory 154 with a star catalog 156.

The navigation initialization system 148 further includes a navigation system 160. The navigation system 160 includes a controller 162 (processor). The controller 162 in this example implements an inertial navigation function 164 and sensor fusion filter 166 that would be stored in memory. The inertial navigation function provides operating instructions implemented by controller 162 to generate an output of the navigation system 160. The sensor fusion filter implemented by the controller 162 provides a blending filter such as, but not limited to a Kalman filter. Controller 162 receives signals from ISA 168. ISA includes three accelerometers and three gyroscopes. In one example, the ISA is an IMU. The controller 162 of the navigation system 160 further receives the altitude information from an altitude reference system 170 and UTC time from a reference oscillator 172. As illustrated in the example navigation initialization systems 148 and 102, the controller and functions (software) of embodiments may be part of/located in different components, such as but not limited to a collocated star tracker/ISA, a star tracker, an ISA, a navigation system. ISA 168 is used to determine at least an attitude with respect to a local-vertical frame. In an example where the ISA is not collocated with the star tracker, reference fixed angles are used to correlate angles between the ISA and a star tracker.

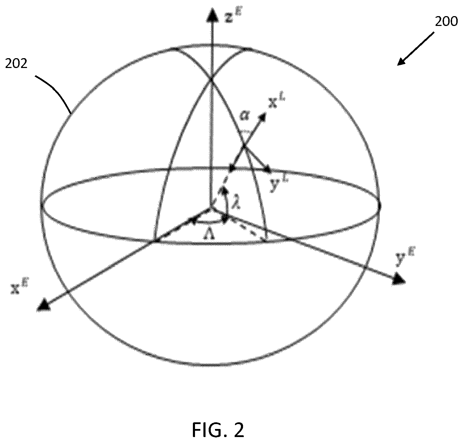

In examples illustrated in Figures 1A, 1B and 2, coordinate frames are right-handed cartesian frames. In Figures 1A and 1B, a star tracker body frame ($B$) is illustrated. $Z^B$ axis in this example is along a line-sight (radial). The $X^B$ axis is along the lateral axis (positive right), and the $Y^B$ axis is orthogonal to a ZY plane in the examples of Figures 1A and 1B.

Other coordinate frames used, in examples, are illustrated in reference coordinate frame arrangement 200 of Figure 2. Earth centered earth fixed frame ($E$) is fixed with respect to earth 202 (rotates with the earth 202). The earth 202 rotates along the $Z^E$ axis (spin axis) with the north pole being positive. The $X^E$ axis and $Y^E$ axis are at the equator plane (zero-degree latitude) with the $X^E$ axis intersecting the Greenwich meridian (zero-degree longitude) and the $Y^E$ axis intersecting the 90-degree east meridian (plus 90-degree longitude).

A local vertical frame "$L$" is a geodetic local-vertical wander azimuth coordinate frame. The $X^L$ axis and $Y^L$ axis in this frame are in a local horizontal plane. The $Z^L$ axis in this frame is down along a local vertical. When the wander azimuth angle ($\alpha$) is zero, the coordinate axis point is in order of north, east, down (i.e., NED frame).

An earth centered inertial frame ($I$) that is fixed with respect to the distant stars is also used. Star tracker 104 provides an orientation of the star tracker 104 with respect to an earth centered inertial (ECI) frame. Star tracker and inertial sensors of the CNS 105 sense motion with respect to this frame. The ISA accelerometers are used to determine the level plane tilt angles of the CNS 105. The tilt angles include longitude angle A, latitude angle $\lambda$, and wander angle $\alpha$ as illustrated in Figure 2. The tilt angles provide orientation information of a vertical plane of the star tracker 104 with respect to a local vertical (LV) plane.

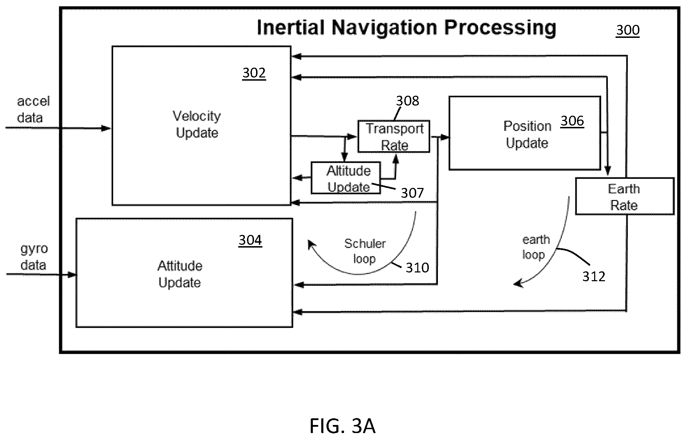

Embodiments use strapdown inertial navigation with three integrators to provide accurate initial conditions. In a strapdown inertial navigation system, the accelerometers and gyroscopes are connected directly to a frame (platform) of the vehicle to sense acceleration and turning rates of the vehicle. An example of a general inertial navigation processing function 300 is illustrated in Figure 3A. In an example, the controller 108 implements the inertial navigation processing function 300 that is stored in memory 110 to determine at least one of acceleration, attitude, and position. The inertial navigation processing function 300 includes a Schuler loop 310 and an earth loop 312. The Schuler loop 310 of the function takes account for the inertial platform not only detecting linear acceleration but also a component of gravity causing the platform to tilt. A tilt of platform will result in an increased sensed linear acceleration. The earth loop 312 takes into account that the inertial platform not only detects the vehicle (aircraft in an example) movement but also the earth's rotation. The inertial navigation processing function 300 further includes a transport rate function 308 to take into account for the coordinate system changing with respect to velocity of the vehicle 100.

In the block diagram of the inertial navigation processing function 300 of Figure 3A example, acceleration data is input into a velocity update function 302 that provides an update in velocity of the vehicle. An output of the velocity update function 302 is provided to the transport rate function 308 and an altitude update function 307. As discussed above, the transport rate function 308 determines the rotation of the local level frame due to the platforms motion along the earth surface. The altitude update function 307 updates the altitude determination of vehicle 100. An output of the altitude update function 307 and the transport rate function 308 is provided to the velocity update function 302. Further an output of the altitude update function 307 is provided to the transport rate function 308.

An output of the transport rate function 308 is further provided to a position update function 306 and an attitude update function 304. The position update function 306 determines the position of vehicle 100. The attitude update function 304 determines the attitude of the vehicle 100. Gyroscope data is also input into the attitude update function 304. An output of the attitude function is input into the velocity update function 302. An output of the position update function 306 is provided to an earth rate function 314. The earth rate function takes into account the rotation of the earth. An output of the earth rate function 314 is provided to the velocity update function 302. Another output of the earth rate function 314 is provided to the attitude update function 304 as part of the earth loop 312.

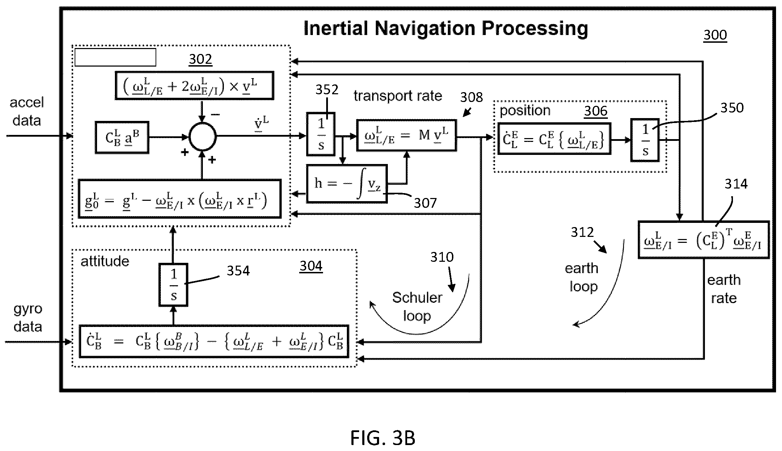

Figure 3B illustrates specific functions used in an example embodiment. In the functions illustrated in Figure 3B, the meaning of the following symbols are as follows.

$v$ = velocity

$\omega$ = angular velocity

C = attitude direction cosine matrix (DCM)

$r$ = position vector

$g$ = gravity

$h$ = ellipsoid altitude

$a$ = specific force

Further, vectors are denoted with underline and are treated as column vectors unless indicated otherwise. A superscript generally indicates an associated frame. A superscript and subscript generally indicate a transformation matrix from a first reference frame to a second reference frame. A dot over a symbol indicates a derivative of the symbol. The ratio 1/s signifies an integrator.

As discussed above, embodiments use a strapdown inertial navigation that uses three integrators (1/s) to provide accurate initial conditions. The first integrator 350 integrates a time derivative of a position transformation matrix ($\dot{C}_L^E$), the second integrator 352 integrates a time derivative of a velocity vector ($\dot{v}^L$), and the third integrator 354 integrates a time derivative of an attitude transformation matrix ($\dot{C}_B^L$).

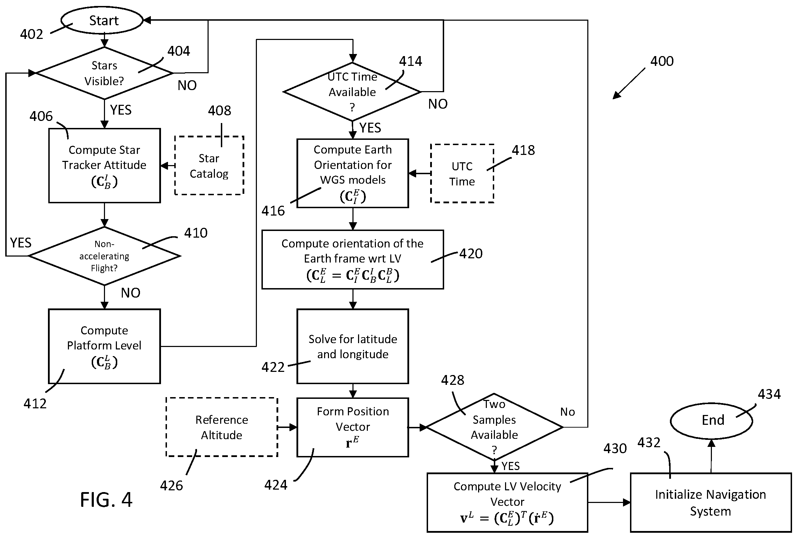

A method of determining navigation information is illustrated in the navigation information gathering flow diagram 400 of Figure 4. The navigation information gathering flow diagram 400 is provided as a series of sequential blocks that may be performed by the controller 108 implementing instructions set out in memory 110. The sequence of blocks may occur in a different order or even in parallel in other examples. Hence the present invention is not limited to the sequence of blocks set out in Figure 4.

The navigation information gathering flow diagram 400 starts at block 402. At block 404 it is determined if the stars 120 are visible with the star tracker 104. If the stars 120 are not visible, the process continues at the start at block 402 until the stars 120 are visible. In another embodiment, if the stars are not visible, another initialization process is used.

If it is determined at block 404 the stars 120 are visible to star tracker 104, star tracker attitude ($C_B^I$) is determined at block 406 using star positioning data in a star catalog 408. It is then determined if the vehicle is currently in a non-accelerating flight at block 410. If it is determined that the vehicle is accelerating at block 410, the process continues at block 404 until it can be determined at block 410 that the vehicle is not accelerating. If the vehicle is accelerating, gravity may cause pitching and rolling measurements to be off because the effects of gravity cannot be separated out.

Once it is determined at block 410, the vehicle is not accelerating, a platform level ($C_B^L$) is computed at block 412. At block 414 it is determined if the UTC time is available. If it is determined the UTC time is not available, the process goes back to the start at block 420 in this example. If it is determined that the UTC time is available at block 414, the earth orientation for world geodetic system (WGS) models ($C_I^E$), are determined at block 416 using the UTC time from block 418. WGS models provide a three-dimensional coordinate reference frame in particular geographic regions of the earth.

At block 420, the orientation of the earth frame with respect to a LV ($C_L^E = C_I^E C_B^I C_L^B$) is computed. Latitude and longitude are then solved in block 422. The position or location determined by the latitude and longitude can be used by the navigation system 130 in generating a navigation solution. A position vector $r^E$ is formed at block 424 using a reference altitude from block 426. The position vector $r^E$ may also be used by the navigation system 130 in generating a navigation solution.

It is then determined at block 428 if two samples are available. If two samples are not available at block 428, the process goes to the start at block 402 in this example. If two samples are available, the LV velocity Vector $v^L = (C_L^E)^T (r^E)$ is determined at block 430. Where:

$$\mathbf{C}_L^E = \begin{bmatrix} -sin(\Lambda)sin(\alpha) - cos(\Lambda)sin(\lambda)cos(\alpha) & -sin(\Lambda)cos(\alpha) + cos(\Lambda)sin(\lambda)sin(\alpha) & -cos(\Lambda)cos(\lambda) \\ cos(\Lambda)sin(\alpha) - sin(\Lambda)sin(\lambda)cos(\alpha) & cos(\Lambda)cos(\alpha) + sin(\Lambda)sin(\lambda)sin(\alpha) & -sin(\Lambda)cos(\lambda) \\ cos(\lambda)cos(\alpha) & -cos(\lambda)sin(\alpha) & -sin(\lambda) \end{bmatrix}$$

Further with $C_L^E$, the tilt angles used are as follows:

$$\text{latitude angle: } \lambda = -\sin^{-1}\left(\mathbf{C}_{LV}^{ECEF}(3, 3)\right)$$

$$\text{longitude angle: } \Lambda = \tan^{-1}\left(\frac{\mathbf{c}_{LV}^{ECEF}(2, 3)}{\mathbf{c}_{LV}^{ECEF}(1, 3)}\right)$$

$$\text{wander angle: } \alpha = \tan^{-1}\left(\frac{-\mathbf{c}_{LV}^{ECEF}(3, 2)}{\mathbf{c}_{LV}^{ECEF}(3, 1)}\right)$$

The navigation system 130 may then be initialized based on at least one of the solved latitude and longitude, the formed position vector $r^E$, and the determined LV velocity vector $v^L$ at block 432. Once initialization of the navigation system has occurred, the process ends at block 434. As discussed above, the navigation system 130 may then be used at least in part for the vehicle control system 132.

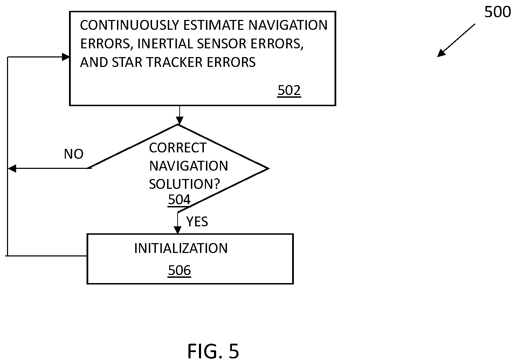

Referring to Figure 5, a method of initializing a navigation system is illustrated in a propagation and correction flow diagram 500. The propagation and correction flow diagram 500 is provided as a series of sequential blocks that may be performed by the controller 108 implementing instructions set out in memory 110. The sequence of blocks may occur in a different order or even in parallel in other examples. Hence the present invention is not limited to the sequential sequence of blocks set out in Figure 5.

Propagation and correction flow diagram 500 begins at block 502, where navigation errors, inertial sensor errors, and star tracker errors are continuously determined by propagating a strapdown navigation solution using the gyroscopes and accelerometers of the ISA 106 and the Kalman filter 111. By continuously propagating and correcting for errors in the navigation solution, the initialization navigation processing function can be run as a reversionary mode, which may be entered after power up for initialization, or any time during normal operation to re-initialize the navigation solution. At block 504 of the propagation and correction flow diagram 500, it is determined if a correction to a navigation solution is needed. In one example, this may occur at power up. In another example, this may occur at any time during normal operation to re-initialize the navigation solution as discussed above. If it is determined at block 504 it is not time to correct the navigation solution, the process continues at block 502 in this example. If it is determined at block 504 it is time to correct the navigation solution, initialization (or re-initialization) occurs at block 506 and the process then continues at block 502.

EXAMPLE EMBODIMENTS

Example 1 is a navigational initialization system that includes a reference oscillator, altitude reference system, a CNS, and a controller. The reference oscillator is used to generate timing signals. The altitude reference system is used to generate altitude information. The CNS includes a star tracker and an ISA. The star tracker is configured to determine orientation of the star tracker with respect to an ECI frame. The ISA is used to determine at least an attitude with respect to a local vertical frame. The controller is configured to generate an initialization signal using the timing signals generated by the reference oscillator, the altitude information generated from the altitude reference system, and at least one output of the CNS. The initialization signal is configured to initialize a navigation system.

Example 2, includes the navigation initialization system of Example 1, further including a memory configured to at least store operating instructions implemented by the controller.

Example 3 includes the navigation initialization system of any of the Examples 1-2, wherein the controller is configured to determine at least one of a position vector, and a local vertical velocity vector from the at least one output of the CNS.

Example 4 includes the navigation initialization system of any of the Examples 1-3, wherein the star tracker and the ISA are collocated.

Example 5 includes the navigation initialization system of any of the Examples 1-4, wherein the ISA further includes three gyroscopes used to determine angular motion of the CNS and three accelerometers used to determine tilt angles of the CNS.

Example 6 includes the navigation initialization system of any of Examples 1-5, further including a blending filter. The controller configured to use the blending filter to continuously propagate and correct for errors in a navigation solution from the navigation system.

Example 7 includes the navigation initialization system of Example 6, wherein the controller is configured to estimate at least one of navigation errors, inertial sensor errors, and star tracker errors by propagating the navigation solution from the navigation system using gyroscope and accelerometer outputs from the ISA and the blending filter to estimate the at least one of the navigation errors, the inertial sensor errors, and the star tracker errors.

Example 8 includes a system that includes a reference oscillator, an altitude reference system, a CNS, a controller, a memory, a navigation system, and a vehicle control system. The reference oscillator is used to generate timing signals. The altitude reference system is used to generate altitude information. The CNS includes a star tracker and an ISA. The star tracker is configured to determine orientation of the star tracker with respect to an ECI frame. an inertial sensor assembly (ISA) used to determine at least an attitude to a local vertical frame. The controller is configured to generate an initialization signal using the timing signals generated by the reference oscillator, the altitude information generated from the altitude reference system, and at least one output of the CNS. The memory is configured to at least store operating instructions implemented by the controller. The navigation system is in communication with the controller. The generated initialization signal is configured to initialize the navigation system. The vehicle control system is configured to control the operation of an associated vehicle based at least in part on an output of the navigation system.

Example 9 includes the system of Example 8, wherein the star tracker and the ISA are collocated.

Example 10 includes a method of initializing a navigation system with a celestial navigation system. The method includes computing a star tracker attitude with a star tracker; computing a platform level using the computed star tracker attitude; computing earth orientation for a WGS model using UTC and the computed platform level; computing orientation of an earth frame with respect to a LV using the computed earth orientation of the WGS model; solving latitude and longitude using the computed orientation of the earth frame with respect to the LV; forming a position vector using the solved latitude, the solved longitude, and a reference altitude; and initializing the navigation system based on the formed position vector.

Example 11 includes the method of Examples 10, further including determining if stars are visible; and if the stars are visible, computing the star tracker attitude with the star tracker.

Example 12 includes the method of any of the Examples 10-11, further including using a star catalog in computing the star tracker attitude.

Example 13 includes the method of any of the Examples 10-12, further including determining if a vehicle using the navigation system is accelerating; and computing the platform level when the vehicle is not accelerating,

Example 14 includes the method of any of the Examples 10-13, further including determining if the UTC time is available; and computing the earth orientation for the WGS model when the UTC time is available.

Example 15 includes the method of any of the Examples 10-14, further including determining if two formed position vectors are available; computing a LV velocity vector when at least two formed position vectors are available; and initializing the navigation system based at least in part on the computed LV velocity vector.

Example 16 includes the method of any of the Examples 10-15, further including initializing the navigation system upon power-up of the navigation system.

Example 17 includes the method of any of the Examples 10-16, further including estimating at least one of navigation errors, inertial sensors errors, and star tracker errors.

Example 18 includes the method of Examples 17, further including propagating a navigation solution from the navigation system using gyroscopes and accelerometer outputs from an inertial measurement unit and a Kalman filter to estimate the at least one of the navigation errors, the inertial sensors errors, and the star tracker errors.

Example 19 includes the method of any of the Examples 16-18, further including continuously propagating the navigation solution and correcting errors in the navigation solution.

Example 20 includes the method of Example 19, further including re-initializing the navigation system during normal operation of the navigation system based on a then current propagated navigation solution.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. A navigational initialization system (102) comprising:

   a reference oscillator (112) to generate timing signals;
   an altitude reference system (114) to generate altitude information; and
   a celestial navigation system (CNS) (105) including,

   a star tracker (104) configured to determine an orientation of the star tracker (104) with respect to an earth centered inertial (ECI) frame, and
   an inertial sensors assembly (ISA) (106) used to determine at least an attitude with respect to a local vertical frame; and

   a controller (108) configured to generate an initialization signal using the timing signals generated by the reference oscillator (112), the altitude information generated from the altitude reference system (114), and at least one output of the CNS (105), the initialization signal configured to initialize a navigation system (130).

2. The navigation initialization system (102) of claim 1, further comprising:
   a memory (110) configured to at least store operating instructions implemented by the controller (108).

3. The navigation initialization system (102) of claim 1, wherein the controller (108) is configured to determine a position vector and a local vertical velocity vector from the at least one output of the CNS (105).

4. The navigation initialization system (102) of claim 1, wherein the star tracker (104) and the IMU (106) are collocated.

5. The navigation initialization system (102) of claim 1, wherein the ISA (106) further comprises:

   three gyroscopes used to determine angular motion of the CNS (105); and
   three accelerometers used to determine tilt angles of the CNS (105).

6. The navigation initialization system (102) of claim 1, further comprising:
   a blending filter (110), the controller (108) configured to use the blending filter (111) to continuously propagate and correct for errors in a navigation solution from the navigation system (130).

7. The navigation initialization system (102) of claim 6, wherein the controller (108) is configured to estimate at least one of navigation errors, inertial sensor errors, and star tracker errors by propagating the navigation solution from the navigation system (130) using gyroscope and accelerometer outputs from the IMU (106) and the blending filter (111) to estimate the at least one of a navigation error, an inertial sensor error, and a star tracker error.

8. A method of initializing a navigation system (130) with a celestial navigation system (102), the method comprising:

computing a star tracker attitude with a star tracker (104);
computing a platform level using the computed star tracker attitude;
computing earth orientation for a world geodetic system (WGS) model using coordinated universal time (UTC) and the computed platform level;
computing orientation of an earth frame with respect to a local vertical (LV) using the computed earth orientation of the WGS model;
solving latitude and longitude using the computed orientation of the earth frame with respect to the LV;
forming a position vector using the solved latitude, the solved longitude, and a reference altitude; and
initializing the navigation system (130) based at least in part on one of the solved latitude, the solved longitude, and the formed position vector.

9. The method of claim 8, further comprising:

determining if stars are visible; and
if the stars are visible, computing the star tracker attitude with the star tracker (104).

10. The method of claim 8, further comprising:

determining if a vehicle (100) using the navigation system (130) is accelerating; and
computing the platform level when the vehicle (130) is not accelerating.

FIG. 1A

FIG. 1B

EP 4 650 714 A1

FIG. 2

FIG. 3A

**Inertial Navigation Processing** $\underline{300}$

$\underline{302}$

$\left( \underline{\omega}_{L/E}^{L} + 2\underline{\omega}_{E/I}^{L} \right) \times \underline{v}^{L}$

$C_{B}^{L} \, \underline{a}^{B}$

$\underline{g}_{0}^{L} = \underline{g}^{L} - \underline{\omega}_{E/I}^{L} \times \left( \underline{\omega}_{E/I}^{L} \times \underline{r}^{L} \right)$

accel data

352    transport rate    308

$\dfrac{1}{s}$

$\underline{\omega}_{L/E}^{L} = M \, \underline{v}^{L}$

$h = -\int \underline{v}_{z}$    307

$\dot{v}^{L}$

position    $\underline{306}$

$\dot{C}_{L}^{E} = C_{L}^{E} \{ \underline{\omega}_{L/E}^{L} \}$

$\dfrac{1}{s}$    350

$\underline{\omega}_{E/I}^{L} = \left( C_{L}^{E} \right)^{T} \underline{\omega}_{E/I}^{E}$    314

earth rate

312    earth loop

310    Schuler loop

attitude    $\underline{304}$

$\dfrac{1}{s}$    354

gyro data

$\dot{C}_{B}^{L} = C_{B}^{L} \{ \underline{\omega}_{B/I}^{B} \} - \{ \underline{\omega}_{L/E}^{L} + \underline{\omega}_{E/I}^{L} \} C_{B}^{L}$

FIG. 3B

15

**FIG. 4**

400

402 — Start

404 — Stars Visible? — NO

YES

406 — Compute Star Tracker Attitude $(\mathbf{C}_B^I)$

408 — Star Catalog

410 — Non-accelerating Flight? — YES / NO

412 — Compute Platform Level $(\mathbf{C}_B^L)$

414 — UTC Time Available? — NO

YES

416 — Compute Earth Orientation for WGS models $(\mathbf{C}_I^E)$

418 — UTC Time

420 — Compute orientation of the Earth frame wrt LV $(\mathbf{C}_L^E = \mathbf{C}_I^E \mathbf{C}_B^I \mathbf{C}_L^B)$

422 — Solve for latitude and longitude

424 — Form Position Vector $\mathbf{r}^E$

426 — Reference Altitude

428 — Two Samples Available? — No / YES

430 — Compute LV Velocity Vector $\mathbf{v}^L = (\mathbf{C}_L^E)^T (\dot{\mathbf{r}}^E)$

432 — Initialize Navigation System

434 — End

```
  ┌─────────────────────────────────────┐
  │ CONTINUOUSLY ESTIMATE NAVIGATION     │           500
  │ ERRORS, INERTIAL SENSOR ERRORS,      │
  │ AND STAR TRACKER ERRORS              │
  │                              502     │
  └─────────────────────────────────────┘
                    │
                    ▼
              ╱╲
        ╱          ╲
  NO   ╱   CORRECT   ╲
◄──────   NAVIGATION
        ╲ SOLUTION?  ╱
          ╲  504   ╱
            ╲    ╱
              ╲╱
                │ YES
                ▼
  ┌─────────────────────────────────────┐
  │         INITIALIZATION               │
  │              506                     │
  └─────────────────────────────────────┘
```

FIG. 5

| | Europäisches Patentamt European Patent Office Office européen des brevets | **EUROPEAN SEARCH REPORT** | **Application Number** EP 25 17 4176 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/025571 A1 (SKILTON ALASTAIR [GB] ET AL) 23 January 2020 (2020-01-23) | 1-7 | INV. G01C21/02 G01C21/16 |
| A | * paragraphs [0011], [0012], [0022], [0027], [0030], [0039], [0042], [0047], [0049] - [0051], [0053], [0058] * * figure 2 * ----- | 8-10 | |
| X | CN 101 893 440 A (HARBIN INST OF TECHNOLOGY) 24 November 2010 (2010-11-24) | 8-10 | |
| A | * paragraphs [0010], [0013], [0015] - [0018], [0021], [0039], [0041] - [0044] * ----- | 1-7 | |

| TECHNICAL FIELDS SEARCHED (IPC) |
|---|
| G01C |

The present search report has been drawn up for all claims

| Place of search | Date of completion of the search | Examiner |
|---|---|---|
| The Hague | 4 September 2025 | Nikoli, Revekka |

## ANNEX TO THE EUROPEAN SEARCH REPORT
## ON EUROPEAN PATENT APPLICATION NO.

EP 25 17 4176

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2025

| Patent document cited in search report | Publication date | Patent family member(s) | Publication date |
|---|---|---|---|
| US 2020025571 A1 | 23-01-2020 | EP 3599444 A1<br>GB 2575971 A<br>KR 20200011002 A<br>US 2020025571 A1 | 29-01-2020<br>05-02-2020<br>31-01-2020<br>23-01-2020 |
| CN 101893440 A | 24-11-2010 | NONE | |

For more details about this annex : see Official Journal of the European Patent Office, No. 12/82